# EUROPEAN PATENT SPECIFICATION

(11) **EP 4 690 252 B1**
(45) Date of publication and mention of the grant of the patent: **09.09.2026**
(21) Application number: 24720659.2
(22) Date of filing: 22.03.2024
(51) Int. Cl.: G01N 23/046, G06T 12/10

(54) **SCINTILLATOR DEFECT CORRECTION IN X-RAY MICROSCOPY**
SZINTILLATORFEHLERKORREKTUR IN DER RÖNTGENMIKROSKOPIE
CORRECTION DE DÉFAUT DE SCINTILLATEUR EN MICROSCOPIE À RAYONS X

(30) Priority: 29.03.2023 US 202363492786 P
(43) Date of publication of application: 11.02.2026
(73) Proprietor: Carl Zeiss X-Ray Microscopy, Inc., Dublin, California 94568 (US)
(72) Inventor: ANDREYEV, Andriy, Dublin, California 94568 (US); XU, Xiaochao, Dublin, California 94568 (US); OMLOR, Lars, 73447 Oberkochen (DE); GRAF VOM HAGEN, Christoph Hilmar, 73447 Oberkochen (DE); ANDREW, Matthew, Dublin, California 94568 (US)
(74) Representative: Gulde & Partner
(86) International application number: PCT/US2024/021031
(87) International publication number: WO 2024/206092

(56) References cited:
- CN-A- 111 539 939
- US-A1- 2018 253 624
- US-A1- 2020 065 945

## Description

### TECHNOLOGICAL BACKGROUND

X-ray microscopy (XRM) is a powerful imaging technique for analyzing internal structure on the micro to nano scale. XRM systems provide high resolution images of samples, allowing for detailed study of their properties. XRM systems use a beam of X-rays to illuminate the samples, which is then imaged using a detector subsystem. The X-rays attenuation in the sample is then analyzed to produce an image or projection of the sample.

X-ray computed tomography (CT) is a non-destructive technique for inspecting and analyzing internal structures of samples. Tomographic volume data sets are reconstructed from a series of these projections via standard CT reconstruction algorithms, as the samples are scanned at different angles.

There are a number of different configurations for X-ray CT systems. In X-ray microscopy systems, because the X-ray sources and detector subsystems are large and the samples or objects being scanned are typically small, the X-ray sources and detector subsystems are largely fixed, while the samples are rotated in the X-ray beam, in contrast to medical CT systems in which the patient is stationary and the sources and detector subsystems rotate around the patient.

Often, scintillated detector subsystems are used in XRM systems. Scintillator detectors, such as caesium iodide (CsI), sodium iodide (NaI), lanthanum bromide (LaBr₃) and so on, convert the X-ray photons into visible light photons. The image formed on the scintillator screen is then imaged by a charge coupled device (CCD) or a complementary metal oxide semiconductor (CMOS) sensor array to convert the readings into a spatial distribution map of detected X-ray flux intensities. Scintillators are often coupled to the sensor array with or without one or more photographic lenses, but using microscope objective lenses provides the highest resolution, being better than a micrometer in the best cases.

It is evident that the quality of X-ray image will heavily depend on the quality of the scintillator detectors. For example, any imperfection in the scintillator material can affect the accuracy of the measurement. Typical root causes for such imperfections are unsuccessful polishing, impurities, cracks, water damage (for hygroscopic scintillators), etc. Such defects can frequently result in the need to either replace the scintillator entirely or having certain algorithmic corrections applied. Replacing and finding perfect defect-free detector assembly is a difficult, time-consuming, and expensive process, which also negatively impacts manufacturing yields. Therefore, algorithmic correction, if done properly, can be the right way of dealing with detector defects.

Such defects can often appear as bright dots of several pixel diameters, when CT image reconstruction is performed, those dots will translate into streaks in the final 3D volume set. Thus, correction post-reconstruction is difficult, as the artifacts are highly correlated and obscuring. Only if such defects are sufficiently small (occupying no more than 1-2 pixels on the image sensor) and are not connected, they can be removed by means of median filter or inpainting with minimum impact on image quality.

CN 111 539 939 A discloses a defect detection method based on machine vision, which comprises the following steps: acquiring a CT image to be detected of at least one workpiece; performing feature enhancement on the CT image to be detected through a white Top-Hat transformation algorithm; performing edge segmentation processing and binarization on the CT image to be detected after feature enhancement based on a Sobel operator; extracting a feature vector of the binarized CT image to be detected by using a gray level co-occurrence matrix in the texture features; and the support vector machine judges whether defects exist in the CT image to be detected or not according to the feature vector of the CT image to be detected.

### GENERAL DESCRIPTION

A problem arises when such defects occupy several pixels on the image sensor. Inpainting can be either insufficient or cause different artifacts as well.

Another complication for the removal of such artifacts is the fact that scintillator defects can differently affect the image quality depending on the sample and the X-ray-sample interaction. This makes removal more difficult than simple image subtraction or inpainting (as the region and influence changes).

Other distortions can further arise depending on the detector type, resulting in severe artifacts in X-ray projection images. To give an example, some of X-ray microscopy systems that use optical magnifications to better resolve visible light from a scintillator can suffer from optical aberrations especially in the peripheral regions.

The present disclosure preferably employs a deep learning based method to correct for such defects. Such correction methods and system can be either pre-trained (during a periodic calibration step) or trained "on the fly" per sample type or acquisition conditions.

The correction for the errors is done in two steps.

In the first step, a mapping-out of the detector defective areas can be done. This may be realized via no-sample imaging operation with X-ray source on (air scan). Any discrepancies (zero signal regions, overly high intensity regions, unstable, flickering regions) can be noted either by automatic software or by manual review.

Also, in the first step, the areas that distort the spatial coordinates of the detected X-ray flux location are mapped. For this, a calibration phantom (e.g., in the form of a grid) can be used.

Next step is done with a characteristic sample object or calibration phantom. Pairs of projection images are then acquired, one at normal geometry, and one at shifted geometry. This shifted geometry is obtained with either a shifted X-ray source or a shifted sample stage or a shifted detector, or any combinations of these shifts. Each projection pair (normal and shifted) are acquired so that they visualize a portion of the sample with and without detector defect obstruction.

The normal geometry projection and the shifted geometry projection for a given sample stage rotation (theta) angle ensures that the part or parts of the sample that were previously obscured by the one or more defective detector regions now fall into an area of the scintillator detect that are defect free.

The corresponding input and training target images of the sample or calibration phantom are then registered, and a deep convolutional neural network is trained to learn the transformation rules between the area obscured by the defective region and the same area as visible in the non-defective region of the detector.

During the standard acquisition the trained network is to be applied to acquired data to correct for defects.

According to one aspect of the disclosure, a method for compensating for detector defects in an X-ray microscopy system is provided. Often these defects include isolated, space limited imperfections such as scintillator scratches, polishing defects, impurities, dead pixels. The method comprises collecting a pair of a normal geometry projection and shifted geometry projection with a detector for each defect of the detector and training a machine learning system using the pairs of the normal geometry projection and shifted geometry projection. Each projection pair (normal and shifted) are acquired so that they visualize a portion of a sample with and without detector defect obstruction. The method then includes correcting tomographic 2D projection datasets and/or tomographic volume sets using the trained machine learning system.

The shifted geometry projections can be collected by shifting the sample, an X-ray source, and/or a detector, for example. Preferably, the projections are collected at the same acquisition parameters as projections of the sample that are to be corrected.

In an embodiment, several pairs of the normal geometry projections and shifted geometry projections are collected at different sampling theta angles.

In an embodiment, the defects of the detector can be mapped such as with a no-sample imaging operation (air scan).

In an embodiment, the machine learning system includes a neural network.

In an embodiment, correcting the tomographic 2D projection datasets and/or tomographic volume sets can include deriving correction factors for each defect and possibly even for each defect and acquisition parameters. In other words; correcting the tomographic 2D projection datasets and/or tomographic volume sets includes deriving correction factors for each defect. In an embodiment, correcting the tomographic 2D projection datasets and/or tomographic volume sets includes deriving correction factors for each defect and acquisition parameters.

In some examples, the pairs of the normal geometry projection and shifted geometry projection are collected with a phantom.

Preferably, the shifted geometry projections are collected by shifting the sample or phantom, the X-ray source, and/or the detector. The projections may be collected at the same or similar acquisition parameters as the projections that are corrected.

It is preferred that the training set of normal geometry projections and shifted geometry projections are collected at different theta angles which allows to better sample (allows for a better sampling of) the acquisition conditions.

The above and other features including various novel details of construction and combinations of parts, and other advantages, will now be more particularly described with reference to the accompanying drawings and pointed out in the claims. It will be understood that the particular method and device embodying the disclosure are shown by way of illustration and not as a limitation. The principles and features of this disclosure may be employed in various and numerous embodiments.

### BRIEF DESCRIPTION OF THE DRAWINGS

In the accompanying drawings, reference characters refer to the same parts throughout the different views. The drawings are not necessarily to scale; emphasis has instead been placed upon illustrating the principles of the disclosure. Of the drawings:
Fig. 1 is a schematic diagram of an X-ray microscopy system according to one embodiment.
Fig. 2 is a flow diagram illustrating steps of a method for defect correction according to an embodiment.
Figs. 3A, 3B, and 3C are schematic diagrams showing the registration of the defect areas to the clean areas, acquisition of the training data pairs, and training of the defect correction network.

### DETAILED DESCRIPTION OF THE DRAWINGS

The disclosure now will be described more fully hereinafter with reference to the accompanying drawings, in which illustrative embodiments are shown. This disclosure may, however, be embodied in many different forms and should not be construed as limited to the embodiments set forth herein; rather, these embodiments are provided so that this disclosure will be thorough and complete to those skilled in the art.

As used herein, the term "and/or" includes any and all combinations of one or more of the associated listed items. Further, the singular forms and the articles "a", "an" and "the" are intended to include the plural forms as well, unless expressly stated otherwise. It will be further understood that the terms: includes, comprises, including and/or comprising, when used in this specification, specify the presence of stated features, integers, steps, operations, elements, and/or components, but do not preclude the presence or addition of one or more other features, integers, steps, operations, elements, components, and/or groups thereof. Further, it will be understood that when an element, including component or subsystem, is referred to and/or shown as being connected or coupled to another element, it can be directly connected or coupled to the other element or intervening elements may be present.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

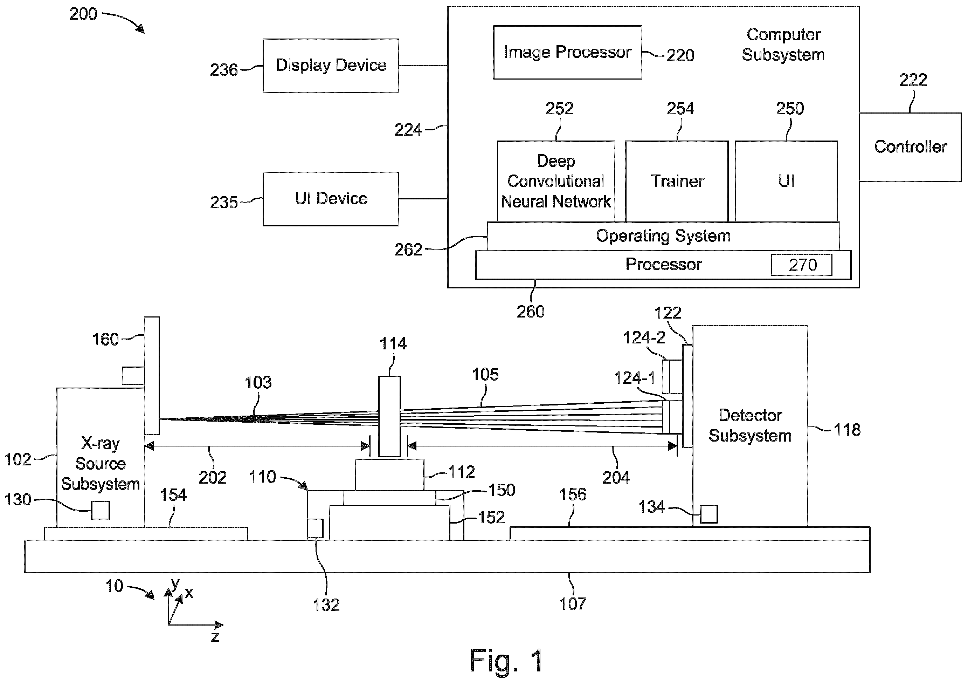

Fig. 1 is a schematic diagram of a XRM system 200 according to an embodiment.

The illustrated microscopy system 200 is an X-ray CT system and preferably includes several subsystems. An X-ray source subsystem 102 generates a polychromatic or possibly monochromatic X-ray beam 103. An object stage subsystem 110 with object holder 112 holds a sample or object 114 in the beam and positions and repositions it to enable scanning of the sample 114 in the stationary beam 103, 105. A detector subsystem 118 detects the beam 105 after it has been modulated by the sample 114. A base, such as a platform or optics table 107, provides a stable foundation for the microscopy system 200 and its subsystems.

In an embodiment, the object stage subsystem 110 has the ability to position and rotate the sample 114 in the beam 103. Thus, the object stage subsystem 110 will typically include linear and rotation stages. The illustrated example has a precision 3-axis stage 150 that translates and positions the sample along the x, y, and z axes, very precisely but only over relatively small ranges of travel. This allows a region of interest of the object 114 to be located within the beam 103/105. The 3-axis stage 150 is mounted on a theta stage 152 that rotates the 3-axis stage 150 and thus sample 114 in the beam around the y-axis. The theta stage 152 is in turn mounted on the base 107.

Thus, the frame of reference or coordinate system of the 3-axis stage 150 is related to the frame of reference or coordinate system 10 of the microscopy system 200 by the angular position of the theta stage 152.

The source subsystem 102 will typically be either a synchrotron X-ray radiation source or alternatively a "laboratory X-ray source" in some embodiments.

As used herein, a "laboratory X-ray source" is any suitable source of X-rays that is not a synchrotron X-ray radiation source. Laboratory X-ray source 102 can be an X-ray tube, in which electrons are accelerated in a vacuum by an electric field and shot into a target piece of metal, with X-rays being emitted as the electrons decelerate in the metal. Typically, such sources produce a continuous spectrum of background X-rays combined with sharp peaks in intensity at certain energies that derive from the characteristic lines of the selected target, depending on the type of metal target used.

In one example, source subsystem 102 is a rotating anode type or microfocused source, with a tungsten target. Targets that include molybdenum, gold, platinum, silver or copper also can be employed. Preferably a transmission configuration is used in which the electron beam strikes the thin target from its backside. The X-rays emitted from the other side of the target are used as the beam 103.

The X-ray beam generated by source subsystem 102 is often conditioned to suppress unwanted energies or wavelengths of radiation. For example, undesired wavelengths present in the beam are eliminated or attenuated, using, for instance, energy filters (designed to select a desired X-ray energy range (bandwidth)) held in a filter wheel 160. These energy filters typically include an 'air' filter corresponding to no filter along with a set of low energy filters for filtering lower energy X-rays and high energy filters for filtering higher energy X-rays.

When the object 114 is exposed to the X-ray beam 103, the X-ray photons or particles, which propagate through the sample 114, form a modulated beam 105 that is received by the detector subsystem 118. In some other examples, an objective lens is used to form an image onto the detector subsystem 118 of the microscopy system 200.

Typically, a magnified projection image of the object 114 is formed on the detector subsystem 118. The magnification of the X-ray stage is equal to the inverse ratio of the source-to-object distance 202 and the source-to-detector distance 204.

To achieve high resolution, an embodiment of the X-ray CT system 200 further utilizes several optical objectives offering different optical magnifications. In one example, the detection system includes a very high resolution detector 124-1. In one example, this high-resolution detector 124-1 has camera, a scintillator, and a microscope objective to provide additional optical magnification in a range between 2x (twofold) and 100x (hundredfold), or more. The scintillator converts the X-rays into an optical image that are magnified by the microscope objective and then detected by the camera.

Other detectors are often included as part of the detector subsystem 118. For example, the detector subsystem 118 can include a lower resolution detector 124-2. This could be a scintillator and flat panel detector or a camera with a lower magnification microscope objective, in examples. Configurations of one, two, or even more detectors 124 of the detector subsystem 118 are possible.

Preferably, the two or more detectors 124-1, 124-2 are mounted on a turret 122 of the detector subsystem 118, so that they can be alternately rotated into the path of the modulated beam 105 from the sample 114.

Typically, the source subsystem 102 and the detector subsystem 118 are mounted on respective z-axis stages. For example, in the illustrated example, the source subsystem 102 is mounted to the base 107 via a source stage 154, and the detector subsystem 118 is mounted to the base 107 via a detector stage 156. In practice, the source stage 154 and the detector stage 156 are lower precision, high travel-range stages that allow the source subsystem 102 and the detector subsystem 118 to be moved into position, often very close to the object 114 during scanning and then be retracted to allow the object 114 to be removed from, a new object 114 to be loaded onto, and/or the object 114 to be repositioned on the object holder 112 of the object stage subsystem 110.

The operation of the microscopy system 200 and the scanning of the object 114 is controlled by a computer subsystem 224 that often includes an image processor 220 and a controller 222.

The computer subsystem 224 includes one or more processors 260 along with their data storage resources such as disc or solid-state drives, and memory 270. The processors 260 are configured to execute an operating system 262 and various applications to run on that operating system 262 to allow for user control and operation of the microscopy system 200. Particularly, user interface app 250 preferably provides a graphical control interface for the system. It preferably enables the user to configure acquisition parameters. In addition, a machine learning app is configured to implement a deep convolutional neural network 252 to correct for detector defects. This network 252 is trained by a training app (trainer) 254 that also is executed by the operating system 262.

User input device(s), UI Device(s), 235 such as a touch screen, computer mouse, and/or keyboard enable interaction between the operator and the computer subsystem 224.

The controller 222 is configured to allow the computer subsystem 224 to control and manage components in the X-ray CT microscope 200 under software control. The controller 222 might be a separate computer system adapted to handle real-time operations or an application program executed by the processor 260. The source subsystem 102 includes a control interface 130 allowing for its control such as setting the X-ray source voltage and choosing a filter on the source filter wheel 160 and monitoring by the controller 222. Similarly, the object stage subsystem 110 and the detector subsystem 118 have respective control interfaces 132, 134 for allowing for their control and monitoring by the computer subsystem 224 via the controller 222.

In an embodiment, to configure the microscopy system 200 to scan the sample 114 and to adjust acquisition parameters such as the geometrical magnification, X-ray source voltage, X-ray source filtration, camera exposure time, number of frames, and overall number of projections, the operator utilizes a user interface rendered on the display device 236 and generated by the user interface application 250. The source-to-object distance 202 and the source-to-detector distance 204 are set by respective operation of the source stage 154 and detector stage 156 to achieve the desired scanning setup. In addition, the X-ray source voltage and filter are sent to the source subsystem 102. The camera exposure time, number of frames, and overall number of projections are set by interaction with the detector subsystem 118.

Specifically, the source stage 154 and detector stage 156 include respective motor encoder systems or other actuator systems that allow the computer system 224 via the controller 222 to position the respective X-ray source subsystem 102 and the detector subsystem 118 to specified positions via the control interfaces 130, 134. Further, the source stage 154 and detector stage 156 signal the controller 222 of their actual positions.

The operator of the system under automatic control operates the object stage subsystem 110 to perform the CT scan via computer subsystem 224, the controller 222 and the control interfaces 130, 132, 134. Typically, the object stage subsystem 110 will position the object 114 by rotating the object 114 about an axis that is orthogonal to the optical axis of the X-ray beam 103, 105 by controlling the theta stage 152 and/or position of the sample 114 in the x, y, z axes directions using stage 150.

In an embodiment, using the user interface rendered on the display device 236 by the user interface app 250, the operator defines/selects scanning set up including the acquisition parameters via the UI devices 235. These acquisition parameters include X-ray source voltage settings that help to determine the X-ray energy spectrum and exposure time and number of frames on the X-ray source subsystem 102. The operator also typically selects other settings such as the field of view of the X-ray beam 103 incident upon the sample 114, the number of X-ray projection images to create for the sample 114, and the detector 124-1, 124-2 selected. Generally, the acquisition parameters include X-ray source voltage, X-ray source filtration, camera exposure time, number of frames, and overall number of projections and the scanning setup includes the angles to rotate the sample 114 by the stage subsystem 110. In addition, the source-to-object distance 202 and the source-to-detector distance 204 are often specified and these are converted to the necessary positions or settings for the source stage 154 and detector stage 156 as part of the scanning setup.

### Example operation:

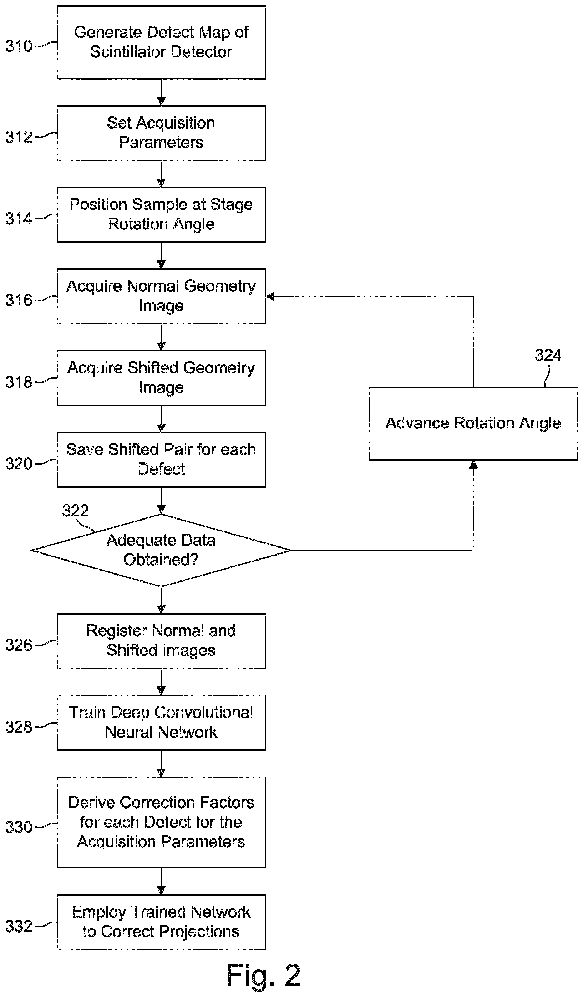

Fig. 2 is a flow diagram showing the steps employing a deep learning based method to correct for detector defects, according to an embodiment.

In step 310, the detector defect areas are mapped. In one example, the imaging operation is performed with X-ray source on air scan, i.e., no sample object 114 present in the field of view (FOV). Any discrepancies (zero signal regions, overly high intensity regions, unstable, flickering regions) are noted either by automatic image analysis performed by the trainer app 254 or by manual review. This is preferably performed with no sample 114 installed. Optionally, a calibration phantom (e.g., in the form of a grid) can be used as the sample 114, especially when needed to map out regions that lead to spatial distortions.

It should be noted that the correction for such detector inefficiencies becomes very difficult to solve once the sample 114 is positioned in the FOV. The sample 114 itself can filter and scatter the X-ray source beam 103. As a result, the correction steps derived from air scan and/or phantoms can become unreliable and can only offer marginal correction in the presence of an arbitrary sample.

In an embodiment, the challenge is addressed by implementing a pre-imaging sample effect calibration step. This is a sample-specific correction derivation that is performed for a particular set of acquisition parameters. In this case, for a particular sample, one needs to perform a series of acquisitions as follows. Specifically, desired acquisition parameters are specified including the X-ray source voltage, X-ray source filtration, camera exposure time in step 312.

The sample 114 is further positioned at a specific geometry and sample stage rotation angle in step 314.

One or several pairs of projection images are acquired, one at normal geometry in step 316, and one at shifted geometry in step 318. This shifted geometry is obtained with either a shifted X-ray source 102 or a shifted sample stage or a shifted detector 118, or any combinations of these shifts (optionally combined with tilts or rotations). The effect is to shift the location of the defects in the plane of the detector's image sensor, i.e., its x-y plane. Thus, each projection pair (normal and shifted) are acquired so that they visualize a portion of the sample with and without detector defect obstruction.

Preferably, one or more shifted projections are obtained for each defect to ensure that each of the mapped defects is shifted to a region of the detector that is defect-free.

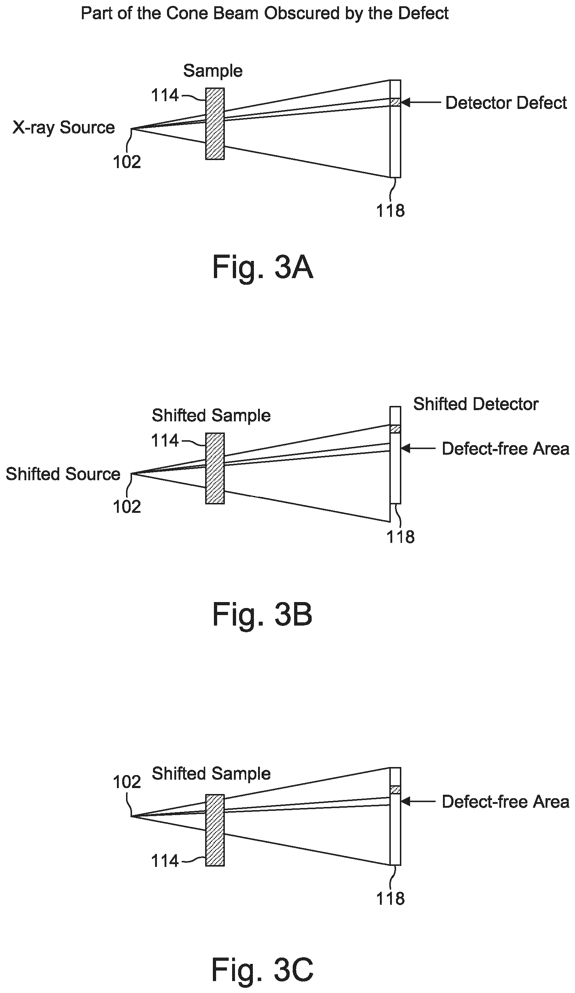

These shifts are shown in Figs 3A, 3B, and 3C. Fig. 3A shows the projection acquired at the normal geometry and the location of the defect in the detector plane. Fig. 3B shows the projection acquired at the shifted geometry by shifting the source 102 and/or sample 114 and/or detector 118. Fig. 3C shows the projection acquired at the shifted geometry by only shifting the sample 114. In either of these two latter cases, the portion of the sample 114 is shifted from the detector defect so that a defect free response can be synthesized.

These pairs are saved in step 320.

The normal and shifted geometry are further preferably collected from a range of theta angles by repeating this process and incrementing the theta stage 152 in step 324, until an adequate dataset has been obtained as determined in step 322.

The normal geometry projection and the shifted geometry projection for a given sample stage rotation (theta) angle ensure that the part or parts of the sample 114 that were previously obscured by the one or more defective detector regions now fall into an area of the scintillator detector that are defect free. This has an advantageous technical effect in collecting several pieces of reference information that are then used to obtain more accurate results for mitigating the drawbacks of the detector defect/s.

Multiple combinations of such shifted pairs are recorded for every known detector defect, ideally for different parts of the sample and different stage rotation angles. The directions and the corresponding shift lengths can be pre-determined manually for a given detector defect map, or they can be determined "on the fly" based on the geometry. Each projection pair (normal and shifted) are acquired so that they visualize the portion of the sample 114 with and without detector defect obstruction.

Then the corresponding input and training target images are registered in step 326, and the deep convolutional neural network 252 is then trained by the trainer 254 to learn the transformation rules that can best correct for the defects in the input images in step 328. This method is preferably more reliable if the defect area is not too large, and/or there is still signal ideally in correlation with the sample 114 being detected in such area. In other words, this method is more reliable if the defect area is not too large and if there is still signal ideally in correlation with the sample 114 being detected in such area. In an embodiment, this method is more reliable if the defect area is not too large. In an embodiment, this method is more reliable if there is still signal ideally in correlation with the sample 114 being detected in such area. Otherwise (else), i.e., when the defect area is too large and/or if there is no signal ideally in correlation with the sample 114 being detected in such area, the method is not more reliable.

During the standard acquisition the trained network can then be applied to acquired data to correct for defects by deriving a set of correction factors in step 330 for the acquisition parameters.

Since machine learning methods are used to derive the set of correction factors, these factors are then employed on the correction of the projection data 332 acquired from similar samples within a sample class and for given acquisition parameters set in step 312.

Optionally, classical inpainting techniques can be used, deriving the parameters from data pairs registered in step 326.

As another alternative, direct machine learning methods can be used. This could take the following forms:

-Projection images are usually normalized with reference images that are collected without objects. This flattens the intensity distribution of the source (and detector). This normalization is preferably done by a pointwise division (log-subtraction). If the reference image is corrupted by detector artifacts, this is a particular problem as those artifacts are now introduced into all normalized projections. Normalization can be included into learning approaches to avoid this problem. For example, a convolutional neural network can have the projection and the reference as input and the normalized artifact corrected projection as output. This kind of network could also include a pointwise division layer to reflect the classical normalization operation. Alternative to this is to use a log-transform (which is necessary for later steps of tomography anyway) and then to rely on linear operators (difference; subtraction). Such a transform has a beneficial technical effect of compressing the numerical range for more accurate computation and/or improved computational efficiency by utilizing subtraction rather than division.

Training of machine learning methods relies on ground truth data. In an embodiment pertaining to detector artifacts, this can be generated using multiple methods like simulation or dithering. A particularly clean way to generate artifact free projection preferably is to record projections using a dithering technique (wobbling the detector to avoid artifacts corrupting the same pixels between projections), to reconstruct the object (maybe even using an artifact reduction method already) and then to recreate the projections using a forward projection operation. This kind of training data can be generated for each device to custom train networks to "clean" the specific detector attached to the device/machine.

Depending on the imaging geometry the detector defects leave a particular path through the projection data. In the case of a regular circular trajectory this path takes a sinusoidal path line (always the same pixels are corrupted) in a sinogram. Thus, a well-known removal algorithm of those defects is to use the sinograms and to remove stripes/lines. This is of course a direct alternative to using single projections for defect removal. A particular removal method that performs very well in practice is based on this sinogram de-striping. This method uses an intensity sorting along the direction of the defect path (lines along the sinogram) which keeps the lines/stripes intact but transforms the intensity profile not belonging to the stripes into a smooth surface. The second step is then a filtering operation orthogonal to the lines which removes the lines but has a very minimal effect on the smooth intensity profile. The last step after the filtering is to undo the sorting operation (which is an application of the inverse permutation of the pixels that was used for sorting them in the first place). This sorting-unsorting operation can be easily combined with machine learning based artifact removal as a pre- and post-processing step (even for arbitrary geometry this can be used as the artifacts align after a proper geometry alignment procedure).

In an embodiment, the detector defect map generated in step 310 can be updated during regular quality control activities, e.g., yearly.

In an embodiment, for defect detection, uncorrelated areas between forward projections of the reconstructed uncorrected 3D volume image and original projection data can be used.

In summary, the present approach can improve the image quality produced by imperfect detectors, as well as increase the intrinsic tolerance to the detector defects, so fewer of them will be disqualified during acceptance testing, thus improving production yields.

While this disclosure has been particularly shown and described with references to preferred embodiments thereof, it will be understood by those skilled in the art that various changes in form and details may be made therein.

### List of reference signs

- 10: Frame of reference or coordinate system
- 102: X-ray source subsystem
- 103, 105: X-ray beam
- 107: Base
- 110: Stage subsystem
- 112: Object holder
- 114: Sample, Object
- 118: Detector subsystem
- 122: Turret
- 124: Detector
- 124-1: High resolution detector
- 124-2: Lower resolution detector
- 130: Source subsystem control interface
- 132: Object stage subsystem control interface
- 134: Detector subsystem control interface
- 150: Stage
- 152: Theta stage
- 154: Source stage
- 156: Detector stage
- 160: Filter wheel
- 200: Microscopy system
- 202: Source-to-object distance
- 204: Source-to-detector distance
- 220: Image processor
- 222: Controller
- 224: Computer subsystem
- 235: UI device
- 236: Display device
- 250: User interface app
- 252: Deep convolutional neural network
- 254: Trainer
- 260: Processor
- 262: Operating system
- 270: Memory

## Claims

1. A method for compensating for detector defects in an X-ray microscopy, XRM, system (200), the method comprising the steps:
collecting (320) a pair of a normal geometry projection (316) and a shifted geometry projection (318) with a detector (118) for each defect of the detector (118);
wherein each projection pair (normal and shifted) is acquired so that it visualizes a portion of a sample (114) with and without detector defect obstruction;
training (328) a machine learning system using the pairs of the normal geometry projection and the shifted geometry projection; and
correcting (332) tomographic 2D projection datasets and/or tomographic volume sets using the trained machine learning system.

2. The method as claimed in claim 1, wherein the shifted geometry projections are collected (318) by shifting the sample (114), an X-ray source (102), and/or the detector (118).

3. The method as claimed in any of claims 1 or 2, wherein the projections are collected at the same acquisition parameters (312) as projections of the sample (114) that are to be corrected.

4. The method as claimed in any of claims 1-3, wherein several pairs of the normal geometry projections and the shifted geometry projections are collected at different sampling theta angles (324).

5. The method as claimed in any of claims 1-4, further comprising mapping defects (310) of the detector (118) such as with a no-sample imaging operation (air scan).

6. The method as claimed in any of claims 1-5, wherein the machine learning system comprises a neural network (252).

7. The method as claimed in any of claims 1-6, wherein correcting the tomographic 2D projection datasets and/or tomographic volume sets comprises deriving correction factors (330) for each defect.

8. The method as claimed in any of claims 1-7, wherein correcting the tomographic 2D projection datasets and/or tomographic volume sets further comprises deriving correction factors for each defect and a particular set of acquisition parameters.

9. The method as claimed in any of claims 1-8, wherein the pairs of the normal geometry projection and the shifted geometry projection are collected with a phantom.

10. An X-ray microscopy, XRM, system (200), comprising:
an X-ray source subsystem (102) configured for generating X-rays (103, 105);
an object stage subsystem (110) configured for holding a sample (114) in the X-rays (103, 105);
a detector subsystem (118) configured for detecting the X-rays (105) after interaction with the sample (114); and
a computer (224) configured for receiving projections from the detector subsystem (118) and for controlling the system (200) to:
collect a normal geometry projection and a shifted geometry projection with the detector (118) for each defect of the detector such that each projection pair (normal and shifted) is acquired so that it visualizes a portion of the sample (114) with and without detector defect obstruction,
train a machine learning system using the pairs of the normal geometry projection and the shifted geometry projection, and
correct tomographic projection datasets and/or tomographic volume sets using the trained machine learning system.

11. The system as claimed in claim 10, wherein the shifted geometry projections are collected by shifting the sample (114), the X-ray source (102), and/or the detector (118).

12. The system as claimed in any of claims 10 or 11, wherein the projections are collected at the same acquisition parameters as projections of the sample (114) that are to be corrected.

13. The system as claimed in any of claims 10-12, wherein several pairs of the normal geometry projections and the shifted geometry projections are collected at different sampling theta angles.

14. The system as claimed in any of claims 10-13, further comprising mapping defects of the detector such as with a no-sample imaging operation (air scan).

15. The system as claimed in any of claims 10-14, wherein the machine learning system comprises a neural network.

## Patentansprüche

1. Verfahren zum Ausgleich von Detektorfehlern in einem Röntgenmikroskopie-, XRM, - System (200), wobei das Verfahren die folgenden Schritte umfasst:
Sammeln (320) eines Paares einer normalen Geometrieprojektion (316) und einer verschobenen Geometrieprojektion (318) mit einem Detektor (118) für jeden Fehler des Detektors (118);
wobei jedes Projektionspaar (normal und verschoben) so erfasst wird, dass es einen Abschnitt einer Probe (114) mit und ohne Behinderung durch den Detektorfehler sichtbar macht;
Trainieren (328) eines maschinellen Lernsystems unter Verwendung der Paare der normalen Geometrieprojektion und der verschobenen Geometrieprojektion; und
Korrigieren (332) von tomografischen 2D-Projektionsdatensätzen und/oder tomografischen Volumensätzen unter Verwendung des trainierten maschinellen Lernsystems.

2. Verfahren nach Anspruch 1, wobei die verschobenen Geometrieprojektionen durch Verschieben der Probe (114), einer Röntgenquelle (102) und/oder des Detektors (118) gesammelt (318) werden.

3. Verfahren nach einem der Ansprüche 1 oder 2, wobei die Projektionen mit denselben Erfassungsparametern (312) gesammelt werden wie die zu korrigierenden Projektionen der Probe (114).

4. Verfahren nach einem der Ansprüche 1-3, wobei einige Paare der normalen Geometrieprojektionen und der verschobenen Geometrieprojektionen bei unterschiedlichen Abtast-Theta-Winkeln (324) gesammelt werden.

5. Verfahren nach einem der Ansprüche 1-4, umfassend ferner das Abbilden von Fehlern (310) des Detektors (118), beispielsweise mittels eines Bildgebungsvorgangs ohne Probe (Luftscan).

6. Verfahren nach einem der Ansprüche 1-5, wobei das maschinelle Lernsystem ein neuronales Netzwerk (252) umfasst.

7. Verfahren nach einem der Ansprüche 1-6, wobei das Korrigieren der tomografischen 2D-Projektionsdatensätze und/oder der tomografischen Volumensätze das Ableiten von Korrekturfaktoren (330) für jeden Fehler umfasst.

8. Verfahren nach einem der Ansprüche 1-7, wobei das Korrigieren der tomographischen 2D-Projektionsdatensätze und/oder der tomographischen Volumensätze ferner das Ableiten von Korrekturfaktoren für jeden Fehler und einen bestimmten Satz von Erfassungsparametern umfasst.

9. Verfahren nach einem der Ansprüche 1-8, wobei die Paare der normalen Geometrieprojektion und der verschobenen Geometrieprojektion mit einem Phantom gesammelt werden.

10. Röntgenmikroskopie-, XRM, -System (200), umfassend:
ein Röntgenquellen-Teilsystem (102), das zur Erzeugung von Röntgenstrahlen (103, 105) konfiguriert ist;
ein Objekttisch-Teilsystem (110), das zum Halten einer Probe (114) in den Röntgenstrahlen (103, 105) konfiguriert ist;
ein Detektor-Subsystem (118), das zum Erfassen der Röntgenstrahlen (105) nach einer Wechselwirkung mit der Probe (114) konfiguriert ist; und
einen Computer (224), der zum Empfangen von Projektionen vom Detektor-Subsystem (118) und zum Steuern des Systems (200) konfiguriert ist, um:
eine normale Geometrieprojektion und eine verschobene Geometrieprojektion mit dem Detektor (118) für jeden Fehler des Detektors zu sammeln, so dass jedes Projektionspaar (normal und verschoben) so erfasst wird, dass es einen Abschnitt der Probe (114) mit und ohne Behinderung durch den Detektorfehler sichtbar macht,
ein maschinelles Lernsystem unter Verwendung der Paare der normalen Geometrieprojektion und der verschobenen Geometrieprojektion zu trainieren und
tomografische Projektionsdatensätze und/oder tomografische Volumensätze unter Verwendung des trainierten maschinellen Lernsystems zu korrigieren.

11. System nach Anspruch 10, wobei die verschobenen Geometrieprojektionen durch Verschieben der Probe (114), der Röntgenquelle (102) und/oder des Detektors (118) gesammelt werden.

12. System nach einem der Ansprüche 10 oder 11, wobei die Projektionen mit denselben Erfassungsparametern gesammelt werden wie die zu korrigierenden Projektionen der Probe (114).

13. System nach einem der Ansprüche 10-12, wobei einige Paare der normalen Geometrieprojektionen und der verschobenen Geometrieprojektionen bei unterschiedlichen Abtast-Theta-Winkeln gesammelt werden.

14. System nach einem der Ansprüche 10-13, umfassend ferner das Abbilden von Fehlern des Detektors, beispielsweise mittels eines Bildgebungsvorgangs ohne Probe (Luftscan).

15. System nach einem der Ansprüche 10-14, wobei das maschinelle Lernsystem ein neuronales Netzwerk umfasst.

## Revendications

1. Procédé de compensation de défauts pour un détecteur dans un système en microscopie à rayons X, XRM (200), le procédé comprenant les étapes suivantes :
collecter (320) un couple d'une projection en géométrie normale (316) et d'une projection en géométrie décalée (318) avec un détecteur (118) pour chaque défaut du détecteur (118) ;
dans lequel chaque couple de projections (normale et décalée) est acquis afin de visualiser une portion d'un échantillon (114) avec et sans obstruction de défaut du détecteur ;
entraîner (328) un système d'apprentissage automatique en utilisant les couples de la projection en géométrie normale et de la projection en géométrie décalée ; et
corriger (332) des ensembles de données de projections 2D tomographiques et/ou des ensembles de volumes tomographiques en utilisant le système d'apprentissage automatique entraîné.

2. Procédé selon la revendication 1, dans lequel les projections en géométrie décalée sont collectés (318) en décalant l'échantillon (114), une source de rayons X (102) et/ou le détecteur (118).

3. Procédé selon l'une quelconque des revendications 1 ou 2, dans lequel les projections sont collectés avec les mêmes paramètres d'acquisition (312) que les projections de l'échantillon (114) à corriger.

4. Procédé selon l'une quelconque des revendications 1 à 3, dans lequel plusieurs couples des projections en géométrie normale et des projections en géométrie décalée sont collectés à différents angles theta d'échantillonnage (324).

5. Procédé selon l'une quelconque des revendications 1 à 4, comprenant en outre un mappage de défauts (310) du détecteur (118), par exemple avec une opération d'imagerie sans échantillon (balayage à l'air).

6. Procédé selon l'une quelconque des revendications 1 à 5, dans lequel le système d'apprentissage automatique comprend un réseau neuronal (252).

7. Procédé selon l'une quelconque des revendications 1 à 6, dans lequel la correction des ensembles de données de projection 2D tomographique et/ou des ensembles de volumes tomographiques consiste à dériver des facteurs de correction (330) pour chaque défaut.

8. Procédé selon l'une quelconque des revendications 1 à 7, dans lequel la correction des ensembles de données de projection 2D tomographique et/ou des ensembles de volumes tomographiques consiste en outre à dériver des facteurs de correction pour chaque défaut et un ensemble particulier de paramètres d'acquisition.

9. Procédé selon l'une quelconque des revendications 1 à 8, dans lequel les couples de la projection en géométrie normale et de la projection en géométrie décalée sont collectés avec un fantôme.

10. Système en microscopie à rayons X, XRM (200), comprenant :
un sous-système de source de rayons X (102) configuré pour générer des rayons X (103, 105) ;
un sous-système de plateau pour objet (110) configuré pour maintenir un échantillon (114) dans les rayons X (103, 105) ;
un sous-système de détecteur (118) configuré pour détecter les rayons X (105) après interaction avec l'échantillon (114) ; et
un ordinateur (224) configuré pour recevoir des projections depuis le sous-système de détecteur (118) et pour commander le système (200) à :
collecter une projection en géométrie normale et une projection en géométrie décalée avec le détecteur (118) pour chaque défaut du détecteur de sorte que chaque couple de projections (normale et décalée) soit acquis afin de visualiser une portion d'un échantillon (114) avec et sans obstruction de défaut du détecteur,
entraîner un système d'apprentissage automatique en utilisant les couples de la projection en géométrie normale et de la projection en géométrie décalée, et
corriger des ensembles de données de projections tomographiques et/ou des ensembles de volumes tomographiques en utilisant le système d'apprentissage automatique entraîné.

11. Système selon la revendication 10, dans lequel les projections en géométrie décalée sont collectés en décalant l'échantillon (114), la source de rayons X (102) et/ou le détecteur (118).

12. Système selon l'une quelconque des revendications 10 et 11, dans lequel les projections sont collectés avec les mêmes paramètres d'acquisition que les projections de l'échantillon (114) à corriger.

13. Système selon l'une quelconque des revendications 10 à 12, dans lequel plusieurs couples des projections en géométrie normale et des projections en géométrie décalée sont collectés à différents angles theta d'échantillonnage.

14. Système selon l'une quelconque des revendications 10 à 13, comprenant en outre un mappage de défauts du détecteur, par exemple avec une opération d'imagerie sans échantillon (balayage à l'air).

15. Système selon l'une quelconque des revendications 10 à 14, dans lequel le système d'apprentissage automatique comprend un réseau neuronal.
